# EUROPÄISCHE PATENTSCHRIFT

(11) **EP 0 671 451 B1**
(45) Veröffentlichungstag und Bekanntmachung des Hinweises auf die Patenterteilung: **26.04.2000**
(21) Anmeldenummer: 95103206.9
(22) Anmeldetag: 07.03.1995
(51) Int. Cl.: C09J 175/00, C08G 18/42, C08G 18/60

(54) **Verfahren zum Verkleben einer metallischen mit einer metallischen oder mit einer nichtmetallischen Oberfäche**
Process for glueing a metallic surface to a metallic or non-metallic surface
Procédé de collage de surface métallique avec une surface métallique ou non-métallique

(30) Priorität: 09.03.1994 DE 9404313 U
(43) Veröffentlichungstag der Anmeldung: 13.09.1995
(73) Patentinhaber: Akzo Nobel Nippon Paint GmbH, 90441 Nürnberg (DE)
(72) Erfinder: Schneider, Christian, D-54531 Manderscheid (DE); Friepörtner, Josef-Anton, D-48163 Münster (DE)
(74) Vertreter: KOHLER SCHMID + PARTNER

(56) Entgegenhaltungen:
- EP-A- 0 350 252
- DE-A- 2 447 852
- GB-A- 1 195 618
- US-A- 5 057 568
- Römmp Chemie Lexikon, 9.Auflage, Seiten 2060-2061

## Beschreibung

Die Erfindung betrifft ein Verfahren zum Verkleben einer metallischen mit einer metallischen oder mit einer nichtmetallischen Oberfläche.

Auch zum Verbinden metallischer Oberflächen oder zum Verbinden metallischer mit nichtmetallischen Werkstoffen, etwa bei der Herstellung von Verbundwerkstoffen, hat sich die Klebetechnik bestens bewährt. Dabei stellen die verwendeten Klebstoffe Hilfsmittel dar, die in vielfältiger Form, zum Beispiel physikalisch oder chemisch trocknend, zum Einsatz kommen.

Neben der Schaffung einer festen und dauerhaften Verbindung ist beim Verkleben von Oberflächen, insbesondere beim Verkleben der Oberflächen metallischer Teile, von vorrangiger Bedeutung, daß sich in der Klebefuge zwischen den Oberflächen eine Verbindungsschicht aus Klebstoff ergibt, die in ihren Materialeigenschaften möglichst weitgehend den Werkstoffeigenschaften der Verbundwerkstoffe entspricht.

Im Rahmen eines herkömmlichen, aus praktischen Anwendungen bekannten Verfahrens werden Metallbänder vor dem Verkleben mit einer Decklackierung und/oder mit einem Haftprimer-Anstrich versehen. In einem separaten Arbeitsgang wird dann der Klebstoff auf wenigstens eine der miteinander zu verbindenden Oberflächen aufgetragen. Dieses Verfahren ist vergleichsweise aufwendig.

Eine Vereinfachung des vorbekannten Verfahrens ist Aufgabe der vorliegenden Erfindung.

Erfindungsgemäß gelöst wird diese Aufgabe durch die Merkmalskombination von Anspruch 1.

Adhäsive, niedermolekulare Polymere sind in der Lage, metallische Untergründe zu benetzen und sich durch die Ausbildung polarer Bindungen mit diesen Untergründen adhäsiv zu verbinden. Infolgedessen haften derartige Polymere an einem metallischen Untergrund fest und dauerhaft. Gleichzeitig ist aber bei diesen Polymeren die Fähigkeit zur Ausbildung kohäsiver Bindungen stark eingeschränkt. Demzufolge lassen sich mit ihnen in der Regel keine den Werkstoffeigenschaften metallischer Werkstücke entsprechende Materialeigenschaften realisieren.

Bei kohäsiven, hochmolekularen Polymeren ist von Hause aus die Adhäsionsfähigkeit eingeschränkt. Dementsprechend sind derartige Polymere an metallischen Untergründen allenfalls wenig haftfähig, besitzen aber Materialeigenschaften, die sogar den Materialeigenschaften metallischer Werkstoffe zumindest gleichwertig sind.

Das erfindungsgemäße Verfahren macht sich die vorstehenden Eigenschaften der nieder- sowie der hochmolekularen Polymere zunutze. Das Lösungsmittel der im Rahmen des erfindungsgemäßen Verfahrens verwendeten Suspension ist ausgewählt aus aromatischen und aliphatischen Kohlenwasserstoffen; sowohl die hoch- als auch die niedermolekularen Polymere sind ausgewählt aus Polyestern und Polyamiden; als Vernetzerkomponente kommt Isocyanat in Frage.

Sind die miteinander verklebten Materialien zur Verwendung im Lebensmittelbereich, insbesondere zur Verwendung bei der Herstellung von Verpackungsmaterialien für Nahrungsmittel bestimmt, so wird eine Suspension gewählt, deren Bestandteile einen Klebstoff mit physiologisch unbedenklicher Zusammensetzung ergeben.

Zum erfindungsgemäßen Aufbringen auf wenigstens eine der miteinander zu verklebenden Oberflächen kann die fertig angemischte Suspension auf die betreffende Oberfläche aufgetragen werden. Es besteht aber auch die Möglichkeit, in zwei getrennten Verfahrensschritten zunächst den Lösungsbestandteil der Suspension aufzutragen und anschließend in den sich ergebenden Lösungsfilm den Feststoffanteil der Suspension einzustreuen. Die adhäsiven niedermolekularen Polymere, die in der auf die Oberfläche aufgebrachten filmartigen Suspensionschicht enthalten sind, benetzen den Untergrund adhäsiv. Während der Suspension Wärme zugeführt wird, schwimmen die kohäsiven, hochmolekularen Polymere auf und reichern sich auf der Oberfläche des Suspensionsfilms an. Nachdem der Lösungsmittelanteil verdampft ist, kommt es bei fortgesetzter Wärmezufuhr zu einer chemischen Umwandlung, in deren Verlauf die zuvor in dem Lösungsmittel gelösten adhäsiven, niedermolekularen Polymere mit der zuvor ebenfalls in dem Lösungsmittel gelösten Vernetzerkomponente zu einer festen Schicht aus Polymeren reagieren, die höhermolekular sind als die niedermolekularen Polymere im Ausgangszustand. Durch die beschriebene chemische Umwandlung nicht beeinträchtigt wird die adhäsive Haftung der bei dieser Umwandlung entstandenen Polymere an dem Untergrund, die gegenüber der starken adhäsiven Haftung der adhäsiven, niedermolekularen Polymere der Lösung unverändert bleibt.

Dadurch daß die hochmolekularen Polymere in der Suspension von den niedermolekularen Bestandteilen umhüllt sind, werden sie vor Sauerstoffzufuhr und somit vor Zersetzung bei Erhöhung der Temperatur geschützt.

Nach Abschluß des Verfestigungsprozesses ist die betreffende Oberfläche mit einer Beschichtung versehen, innerhalb derer sich die adhäsiv gebundenen Polymere im Grenzschichtbereich zum metallischen Untergrund konzentrieren und die kohäsiven Polymere an der Oberfläche angereichert sind. Untereinander sind die verschiedenen Polymerarten adhäsiv vernetzt. Alles in allem ergibt sich eine Oberflächenbeschichtung, die ähnlich einer herkömmlichen Lackierung fest und dauerhaft auf dem Untergrund haftet und die ihrerseits eine außerordentlich strapazierbare Oberfläche besitzt. Nach dem Verfestigen der Suspension werden die zu verklebenden Oberflächen aneinander gelegt und die Kontaktfläche wird, vorzugsweise unter gleichzeitigem Aneinanderdrücken der zu verklebenden Oberflächen, erwärmt. Insbesondere eignet sich das erfindungsgemäße Verfahren zum Verkleben metallischer Werkstoffe.

Für den Fall, daß ein metallischer Werkstoff mit einem nichtmetallischen Werkstoff, beispielsweise mit Holz, verbunden werden soll, reicht es aus, die Suspension lediglich auf die Oberfläche des metallischen Werkstoffs aufzutragen und dort in der vorstehend beschriebenen Art und Weise zu verfestigen. Anschließend wird die nichtmetallische Gegenfläche unmittelbar an die Beschichtung des metallischen Werkstoffs angelegt und die Kontaktfläche von Beschichtung und nichtmetallischer Gegenfläche wird erwärmt. Durch das Erwärmen der Kontaktfläche wird die Oberflächenschicht der Beschichtung aktiviert und die an der Grenzfläche der Beschichtung konzentriert vorliegenden hochmolekularen Polymere gehen mit der nichtmetallischen Gegenfläche eine adhäsive Verbindung ein. Die sich nach dem Abkühlen des Verbundwerkstoffes einstellenden Bindungskräfte sind durchaus ausreichend, um zwischen dem metallischen und dem nichtmetallischen Werkstoff eine feste und dauerhafte Verbindung zu gewährleisten.

Sollen zwei metallische Werkstoffe miteinander verklebt werden, so sind beide metallischen Oberflächen nach dem erfindungsgemäßen Verfahren zu beschichten. Werden nun die beiden beschichteten metallischen Oberflächen mit ihren Beschichtungen aneinander gelegt und wird die Kontaktfläche der Beschichtungen, vorzugsweise unter gleichzeitigem Aneinanderdrücken der zu verklebenden Oberflächen, erwärmt, so werden durch das Erwärmen der Kontaktfläche die Oberflächenschichten beider Beschichtungen aktiviert. Die an der Grenzfläche der Beschichtungen beiderseits konzentriert vorliegenden hochmolekularen Polymere gehen infolgedessen untereinander eine kohäsive Verbindung ein. Dadurch entsteht in der Klebefuge zwischen den metallischen Werkstoffen eine Kohäsionsschicht, die nach dem Abkühlen Materialeigenschaften besitzt, die den mechanisch-technischen Eigenschaften der miteinander verbundenen metallischen Werkstoffe, beispielsweise deren Festigkeit, entsprechen.

In jedem Fall liegt die Klebetemperatur, auf welche die Kontaktfläche der miteinander zu verbindenden Werkstoffe erwärmt werden muß, unterhalb der zum Verfestigen des Suspensionsfilms einzustellenden Beschichtungstemperatur. Die adhäsive Haftung des Klebstoffs an dem Untergrund wird durch die Erwärmung der Kontaktfläche auf Klebetemperatur nicht beeinträchtigt. Auf einen gesonderten Verfahrensschritt zum Auftragen von Klebstoff auf vorbehandelte Oberflächen kann verzichtet werden.

Durch entsprechende Rezeptierung, also beispielsweise durch Veränderung der Mischungsverhältnisse und/oder der Konzentrationen der verwendeten hoch- und niedermolekularen Polymere läßt sich die Klebetemperatur in Anpassung an den jeweiligen Einsatzfall in weiten Grenzen einstellen. Etwa im Falle von Verbundwerkstoffen, die im Freien eingesetzt werden und deren Gebrauchstemperatur aufgrund der Sonneneinstrahlung erfahrungsgemäß rund 80°C erreicht, empfiehlt es sich, für den Klebstoff eine Rezeptierung zu wählen, die eine Klebetemperatur von wenigstens 100°C bedingt.

Unter dieser Voraussetzung ist der Zusammenhalt des Verbundwerkstoffs unter den gegebenen Einsatzbedingungen gewährleistet.

Gleichzeitig kann in entsprechend ausgelegten Trocknungsöfen üblicher Bauart die auf die zu verklebende Oberfläche bzw. auf die zu verklebenden Oberflächen aufgebrachte Suspension durch Wärmezufuhr auf eine Temperatur von 240°C gebracht und dabei verfestigt werden.

Zweckmäßigerweise wird im Rahmen des erfindungsgemäßen Verfahrens die Suspension nach dem Coil-Coating-Verfahren auf die zu verklebende Oberfläche bzw. auf die zu verklebenden Oberflächen aufgebracht und verfestigt. Die Beschichtung von zu verklebenden Oberflächen läßt sich in diesem Fall im großtechnischen Maßstab realisieren.

Zum Verkleben elektrisch leitender Werkstoffe wird im Laufe des erfindungsgemäßen Verfahrens die Kontaktfläche vorteilhafterweise durch induktives Erwärmen wenigstens einer der miteinander zu verklebenden Oberflächen erwärmt.

Die erfindungsgemäß verwendete Suspension kann beispielsweise enthalten:
- 54: Teile Lösungsmittel,
- 15: Teile adhäsive, niedermolekulare Polymere,
- 5: Teile niedermolekulare Vernetzerkomponente,
- 6: Teile hochaktive Vernetzerkomponente und
- 20: Teile kohäsive, hochmolekulare Polymere.

## Patentansprüche

1. Verfahren zum Verkleben einer metallischen mit einer metallischen oder mit einer nichtmetallischen Oberfläche, dadurch gekennzeichnet, daß eine Suspension aus Feststoffteilchen eines hochmolekularen, kohäsiven Polymers, ausgewählt aus Polyestern und Polyamiden, sowie aus einer Trägerflüssigkeit in Form einer Lösung aus wenigstens einem Lösungsmittel, ausgewählt aus aromatischen und aliphatischen Kohlenwasserstoffen, wenigstens einem in dem Lösungsmittel gelösten niedermolekularen, adhäsiven Polymer, ausgewählt aus Polyestern und Polyamiden, sowie wenigstens einer in dem Lösungsmittel gelösten Vernetzerkomponente
- auf wenigstens eine der miteinander zu verklebenden Oberflächen aufgebracht und
- die auf die Oberfläche oder die Oberflächen aufgebrachte Suspension durch Wärmezufuhr verfestigt wird
und daß anschließend
- die miteinander zu verklebenden Oberflächen aneinandergelegt werden und
- die Kontaktfläche erwärmt wird.

2. Verfahren nach Anspruch 1, dadurch gekennzeichnet, daß die Kontaktfläche unter gleichzeitigem Aneinanderdrücken der zu verklebenden Oberflächen erwärmt wird.

3. Verfahren nach einem der vorhergehenden Ansprüche, dadurch gekennzeichnet, daß die auf die zu verklebende Oberfläche bzw. auf die zu verklebenden Oberflächen aufgebrachte Suspension durch Wärmezufuhr auf eine Temperatur von 240°C gebracht und dabei verfestigt wird und daß die Kontaktfläche auf eine Temperatur von 100°C erwärmt wird.

4. Verfahren nach einem der vorhergehenden Ansprüche, dadurch gekennzeichnet, daß die Suspension nach dem Coil-Coating-Verfahren auf die zu verklebende Oberfläche bzw. auf die zu verklebenden Oberflächen aufgebracht und verfestigt wird.

5. Verfahren nach einem der vorhergehenden Ansprüche zum Verkleben elektrisch leitender Werkstoffe, dadurch gekennzeichnet, daß die Kontaktfläche durch induktives Erwärmen wenigstens einer der miteinander zu verklebenden Oberflächen erwärmt wird.

## Claims

1. Process for the adhesive bonding of a metallic surface to a metallic or a non-metallic surface, characterised in that a suspension of solid particles of a high-molecular-weight cohesive polymer, selected from polyesters and polyamides, and a carrier fluid in the form of a solution of at least one solvent, selected from aromatic and aliphatic hydrocarbons, at least one low-molecular-weight, adhesive polymer, which is dissolved in the solvent and which is selected from polyesters and polyamides, and at least one curing component dissolved in the solvent,
- is applied to at least one of the surfaces to be adhesively bonded to one another, and
- the suspension which is applied to the surface(s) is set by the supply of heat,
and in that subsequently
- the surfaces which are to be adhesively bonded to one another are placed against one another, and
- the region of contact is heated.

2. Process according to claim 1, characterised in that the region of contact is heated with simultaneous pressing-together of the surfaces to be adhesively bonded.

3. Process according to any one of the preceding claims, characterised in that the suspension which is applied to the surface(s) to be adhesively bonded is raised by the supply of heat to a temperature of 240°C and is set, and in that the region of contact is heated to a temperature of 100°C.

4. Process according to any one of the preceding claims, characterised in that the suspension is applied to the surface(s) to be adhesively bonded and set according to the coil-coating process.

5. Process according to any one of the preceding claims for the adhesive bonding of electrically conductive materials, characterised in that the region of contact is heated by inductive heating of at least one of the surfaces to be adhesively bonded to one another.

## Revendications

1. Procédé de collage d'une surface métallique avec une surface métallique ou non métallique, **caractérisé** en ce qu'une suspension de particules solides d'un polymère cohésif à haute densité moléculaire, sélectionné parmi les polyesters et les polyamides, ainsi que d'un liquide porteur sous la forme d'une solution d'au moins un solvant, sélectionné parmi les hydrocarbures aromatiques et aliphatiques, d'au moins un polymère adhésif à basse densité moléculaire dissous dans le solvant, sélectionné parmi les polyesters et les polyamides, et d'au moins un composant réticulant dissous dans le solvant,
- est épandue sur au moins une des surfaces à coller entre elles et
- la suspension épandue sur la ou les surfaces est solidifiée par apport de chaleur
et en ce qu'ensuite
- les surfaces à coller entre elles sont appliquées l'une contre l'autre et
- la surface de contact est chauffée.

2. Procédé selon la revendication 1, **caractérisé** en ce que la surface de contact est chauffée en pressant en même temps l'une contre l'autre les surfaces à coller.

3. Procédé selon une des revendications précédentes, **caractérisé** en ce que la suspension épandue sur la ou les surfaces à coller est amenée par apport de chaleur à une température de 240°C et ainsi solidifiée, et en ce que la surface de contact est chauffée à une température de 100°C.

4. Procédé selon une des revendications précédentes, **caractérisé** en ce que la suspension est épandue sur la ou les surfaces à coller entre elles, et solidifiée, selon le procédé de couchage sur bande (« coil coating »).

5. Procédé selon une des revendications précédentes pour le collage de matériaux électriquement conducteurs, **caractérisé** en ce que la surface de contact est chauffée par chauffage inductif d'au moins une des surfaces à coller entre elles.
